# EUROPEAN PATENT APPLICATION

(11) **EP 3 633 930 A1**
(43) Date of publication of application: **08.04.2020**
(21) Application number: 18871213.7
(22) Date of filing: 26.10.2018
(51) Int. Cl.: H04L 12/66

(54) **SESSION TRANSMISSION METHOD, APPARATUS, AND STORAGE MEDIUM**

(30) Priority: 27.10.2017 CN 201711023797
(71) Applicant: ZTE Corporation, Shenzhen, Guangdong 518057 (CN)
(72) Inventor: WANG, Weibao, Shenzhen Guangdong 518057 (CN); WU, Haisheng, Shenzhen Guangdong 518057 (CN)
(74) Representative: Baudler, Ron
(86) International application number: PCT/CN2018/112151
(87) International publication number: WO 2019/080931

(57) **Abstract**

Provided are a session transmission method and apparatus, a storage medium, and a processor. The method comprises the following steps: determining an oscillation frequency when using a first parameter value to implement session transmission in a control channel, the control channel being used for session transmission between gateway devices; when the oscillation frequency is greater than a first preset threshold, adjusting the first parameter value to a second parameter value; and using the second parameter value to implement session transmission in the control channel.

## Description

### TECHNICAL FIELD

The present disclosure relates to the field of communications, and in particular to a session transmission method and apparatus, and a storage medium.

### BACKGROUND

Link Management Protocol (LMP) is a protocol for managing links between nodes and for managing IP Control Channels (IPCCs). Functions of the LMP include management of control channels. The management of control channels is used for determining and maintaining control channels between neighboring nodes (bi-directional control channels, i.e. two control channels in opposite directions between a pair of nodes), which is achieved by a Config message negotiation and a fast keep-alive mechanism (Hello message) between the two nodes.

The Hello message is sent periodically to detect connectivity of a control channel. Since the transmission cycle of Hello message (Hellolnterval) and the expiration cycle of Hello message (HelloDeadlnterval) in the control channel are both on the order of milliseconds, the Hello message is sensitive to network congestion. Once network congestion occurs in the control channel, it will easily cause oscillation of a control channel state (a state of a control channel), and cause oscillation of Traffic Engineering (TE) links, finally resulting in network instability.

In some cases, this problem of control channel oscillation is typically addressed by manually modifying the configuration of the cycle parameter (interval parameter) of Hello message. However, in this manner, the cycle parameter of Hello message can only be set empirically, and the problem of control channel oscillation cannot be automatically solved according to the current state of network congestion.

### SUMMARY

According to an embodiment of the disclosure, there is provided a session transmission method, including the steps of: determining an oscillation frequency when a session transmission is performed in a control channel by use of a first parameter, wherein the control channel is used for session transmissions between gateway devices; adjusting the first parameter value to a second parameter value in a case where a value of the oscillation frequency is greater than a first preset threshold; and performing the session transmission in the control channel by use of a second parameter value.

According to another embodiment of the disclosure, there is provided a session transmission apparatus, including: a first determining module configured to determine an oscillation frequency when a session transmission is performed in a control channel by use of a first parameter, wherein the control channel is used for session transmissions between gateway devices; a first processing module configured to adjust the first parameter value to a second parameter value in a case where a value of the oscillation frequency is greater than a first preset threshold; and a transmission module configured to perform the session transmission in the control channel by use of a second parameter value.

According to still another embodiment of the disclosure, there is further provided a computer-readable storage medium storing a program which, when being executed, causes the methods of the various embodiments of the present disclosure to be implemented.

According to yet another embodiment of the disclosure, there is further provided a session transmission apparatus, including a memory and a processor, wherein the memory is configured to store a program, and the processor is configured to execute the program to implement the methods of the various embodiments of the present disclosure.

### BRIEF DESCRIPTION OF DRAWINGS

The accompanying drawings are included to provide a further understanding of the disclosure, and are incorporated in and constitute a part of the present disclosure. The embodiments and descriptions thereof shown herein in conjunction with the present disclosure are intended to be illustrative only and not constitute an undue limitation of the present disclosure. In the drawings:
Fig. 1 is a block diagram of a hardware structure in a mobile terminal for a session transmission method according to an embodiment of the present disclosure;
Fig. 2 is a flowchart of a session transmission method according to an embodiment of the present disclosure;
Fig. 3 is a schematic diagram of an application scenario according to an embodiment of the present disclosure;
Fig. 4 is another flowchart of the session transmission method according to an embodiment of the present disclosure;
Fig. 5 is a block diagram of a session transmission apparatus according to an embodiment of the present disclosure; and
Fig. 6 is another block diagram of the session transmission apparatus according to an embodiment of the present disclosure.

### DETAILED DESCRIPTION

The disclosure will be described in details below with reference to the drawings in conjunction with the embodiments. It should be noted that the embodiments of the disclosure and features herein may be combined with each other as long as they are not contradictory.

It should be also noted that terms "first", "second", and the like in the description, claims and drawings of the disclosure are used for the purpose of distinguishing similar objects instead of indicating a specific order or sequence.

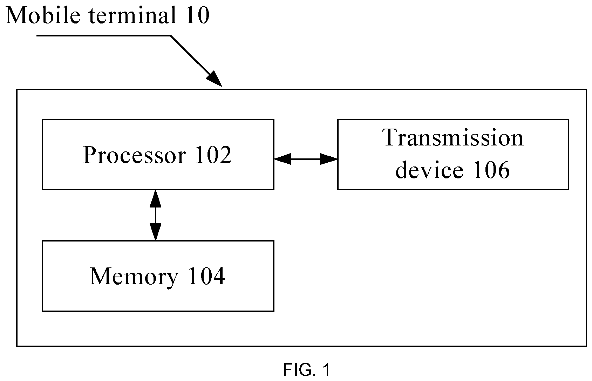

The method embodiments provided in the embodiments of the present disclosure may be implemented in a mobile terminal, a computer terminal or similar computing devices. Fig. 1 is a block diagram of a hardware structure in a mobile terminal for a session transmission method according to an embodiment of the present disclosure. As shown in Fig. 1, the mobile terminal 10 may include at least one (only one is shown in Fig. 1) processor 102 (which may include, but is not limited to, a processing device such as a Microcontroller Unit (MCU) or a Field Programmable Gate Array (FPGA)), a memory 104 for storing data, and a transmission device 106 for communication. It will be understood by those ordinary skilled in the art that the structure shown in Fig. 1 is merely illustrative, and does not form any limitation to the structure of the above electronic device. For example, the mobile terminal 10 may include more or fewer components than those shown in Fig. 1, or have a different configuration than that shown in Fig. 1.

The memory 104 may be configured to store software instructions and modules of application software, such as program instructions/modules corresponding to the session transmission method in the embodiments of the present disclosure. The processor 102 executes the software instructions and modules stored in the memory 104 to perform various functional applications and data processing, so as to, for example, implement the above method. The memory 104 may include a high speed random access memory and may also include a non-transitory memory such as one or more magnetic storage device, flash memory, or other non-transitory solid state memory. In some examples, the memory 104 may further include a memory located remotely from the processor 102, and such a memory may be connected to the mobile terminal 10 via a network. Examples of such networks include, but are not limited to, the Internet, intranets, local area networks, mobile communication networks, and combinations thereof.

The transmission device 106 is configured to receive or transmit data via a network. Specific examples of such networks may include a wireless network provided by a communication provider of the mobile terminal 10. In one example, the transmission device 106 includes a Network Interface Controller (NIC) that may be connected to other network devices through a base station to communicate with the Internet. In an example, the transmission device 106 may be a Radio Frequency (RF) module configured to communicate with the Internet wirelessly.

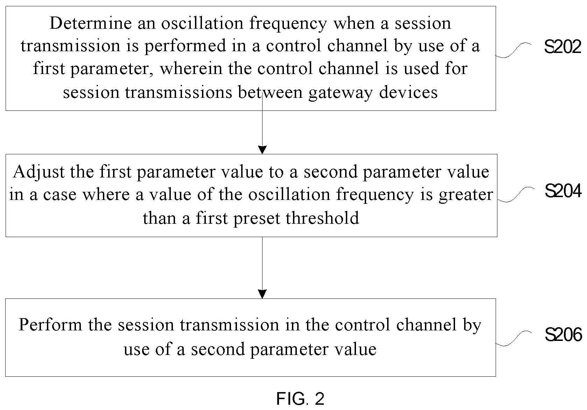

Fig. 2 is a flowchart of a session transmission method according to an embodiment of the present disclosure. As shown in Fig. 2, the method includes the following steps S202 to S206.

At step S202, determining an oscillation frequency when a session transmission is performed in a control channel by use of a first parameter, wherein the control channel is used for session transmissions between gateway devices.

At step S204, adjusting the first parameter value to a second parameter value in a case where a value of the oscillation frequency is greater than a first preset threshold.

At step S206, performing the session transmission in the control channel by use of a second parameter value.

Through the above steps, an oscillation frequency when a session transmission is performed in a control channel by use of a first parameter may be determined during the session transmission, wherein the control channel is used for session transmissions between gateway devices; the first parameter value is adjusted to a second parameter value in response to determining that a value of the oscillation frequency is greater than a first preset threshold; and the session transmission is then performed in the control channel by use of a second parameter value. Therefore, the session transmission can be automatically performed by a method of changing the parameter value, and the parameter value can be automatically changed to effectively control the control channel oscillation.

The executor of the above steps may be a terminal and the like, but is not limited thereto.

In an embodiment, the step of determining the oscillation frequency when the session transmission is performed in the control channel by use of the first parameter value includes: counting a first total number of oscillation when the session transmission is performed in the control channel by use of the first parameter value within a current period; and taking a ratio of the determined (counted) first total number of oscillation to duration of the current period as the value of the oscillation frequency. In an embodiment of the present disclosure, the session transmission may be a Hello message, or may be other session messages. The counting of the first total number of oscillation is performed separately in each period. The control channel may be a channel established between routers for communication. The duration of the current period may be preset.

In an embodiment, the step of counting the first total number of oscillation when the session transmission is performed in the control channel by use of the first parameter value within the current period includes: taking a total number of times that the control channel is switched from an abnormal session transmission state to a normal session transmission state and from the normal session transmission state to the normal session transmission state within the current period as the first total number of oscillation in the process in which the session transmission is performed in the control channel by use of the first parameter value. In an embodiment of the present disclosure, a counted total number of times that a time interval of the session transmissions in the control channel is greater than a predetermined time interval within the current period may be taken as the first total number of oscillation.

In an embodiment, the step of adjusting the first parameter value to the second parameter value in a case where the value of the oscillation frequency is greater than the first preset threshold includes: determining a first product of the value of the oscillation frequency and the first parameter value; determining a first ratio of the first product to a predetermined constant; determining a second product of the first ratio and the first parameter value; and taking a sum of the second product and the first parameter value as the second parameter value. In an embodiment of the present disclosure, the second parameter value may be determined by a formula.

In an embodiment, after the step of performing the session transmission in the control channel by use of the second parameter value, the method further includes: counting a second total number of oscillation when the session transmission is performed in the control channel by use of the second parameter value within the current period in a case where the session transmission by use of the second parameter value succeeds; and adjusting the second parameter value to a third parameter value and performing session transmission in the control channel by use of the third parameter value in a case where the session transmission by use of the second parameter value fails. In an embodiment of the present disclosure, the case where a session transmission fails includes a case where the session transmission cannot be performed, as well as a case of severe oscillation.

In an embodiment, the steps of adjusting the second parameter value to the third parameter value includes: halving the first ratio to obtain a second ratio; calculating a third product of the second ratio and the first parameter value; obtaining the third parameter value by adding the third product and the first parameter value; and adjusting the second parameter value to the obtained third parameter value. In an embodiment of the present disclosure, the halving refers to dividing the first ratio by 2.

In an embodiment, after the step of performing the session transmission in the control channel by use of the third parameter value, the method further includes: reusing the first parameter value to perform the session transmission in the control channel in a case where the session transmission by use of the third parameter value fails. In an embodiment of the present disclosure, the case where a session transmission fails includes a case where the session transmission cannot be performed, or a case of relatively severe oscillation.

In an embodiment, after the step of determining the oscillation frequency when the session transmission is performed in the control channel by use of the first parameter value within the current period, the method further includes: maintaining the first parameter value in a case where the value of the oscillation frequency is less than or equal to the first preset threshold. In an embodiment of the present disclosure, the first preset threshold may be preset, or may be set according to past experience.

According to the above embodiments, the respective parameters can be automatically determined without manual setting, which improves the accuracy of transmission parameters and saves manpower and material resources.

The present disclosure will be described in detail below with reference to the specific embodiments.

In an embodiment, there is provided a session transmission method in which the cycle parameter of Hello message (corresponding to the first parameter, the second parameter, and the third parameter) is automatically adjusted. In this method, the cycle parameter of Hello message of the control channel can be automatically adjusted to a reasonable value according to the network congestion degree, thereby solving the problem of network instability caused by the control channel entering an oscillation state under poor network conditions.

The method may include the steps of: periodically (corresponding to the current period) counting an oscillation frequency of the control channel state (a control channel state oscillation frequency); counting, within the current period, a total number of times N (corresponding to the first total number of oscillation) that the control channel state is switched from a parameter negotiation state to another state and then restored to the parameter negotiation state, and dividing the counted total number of times N by a duration of the period T to obtain an oscillation frequency F of the control channel state within the current period, wherein F = N/T; applying a suppression strategy to suppress oscillation of the control channel if the frequency value is greater than a preset threshold (corresponding to the first preset threshold); and modifying a cycle parameter of Hello message H1 (corresponding to the first parameter value) in the current control channel according to the oscillation frequency, and performing parameter negotiation (corresponding to the session transmission) of the control channel using a new cycle parameter of Hello message H2 (corresponding to the second parameter value). The cycle parameter of Hello message may be adjusted by an increment within a certain range which may be specified by the user, for example, [100%, 10%). If the increment of the cycle parameter of Hello message is not within this range, the cycle parameter of Hello message will not be adjusted, and the control channel is still established by H1 negotiation. The above process may be represented by the following algorithm (Algorithm 1).

```
         If (F * H1 /1000) > 10%
              H2 = H1 + (F * H1 /1000) * H1
         Else
              H2 = H1
```

After the parameter negotiation of the control channel is successfully performed by use of the new cycle parameter of Hello message, the next period of counting of the control channel state oscillation may be performed.

If negotiation by use of the new cycle parameter of Hello message fails, negotiation by use of a cycle parameter of Hello message H3 having a halved increment may be attempted; and if the negotiation by use of the parameter H3 still fails, the negotiation is performed by us of the original cycle parameter of Hello message H1. This can be represented by the following algorithm (Algorithm 2).

```
         If ((F * H1 / 1000) / 2) > 10%
              H3 = H1 + ((F * H1 /1000) / 2) * H1
         Else
              H3 = H1
```

In an embodiment, there is further provided a session transmission apparatus that can suppress control channel state oscillation in a Link Management Protocol. The session transmission apparatus includes: a configuration module, a statistics module, an algorithm module and a suppression module.

The configuration module is configured to configure relevant parameters of a user-specified suppression strategy for control channel state oscillation. Such parameters include, but are not limited to: an automatic adjustment of enabling, a statistics period, a threshold of oscillation frequency, a range of the adjustment of the transmission cycle of Hello message (Hellolnterval), a range of adjustment of the expiration cycle of Hello message (HelloDeadlnterval), increment range of the adjustment of cycle parameter, an algorithm model of the cycle parameter of Hello message, a counting of oscillation situations only, and the like.

The statistics module (corresponding to the statistics unit) is configured to periodically count an oscillation frequency of a control channel state; and count, within the current period, a total number of times that the control channel state is switched from a parameter negotiation state to another state and then restored to the parameter negotiation state, and divide the counted total number of times by a duration of the period to obtain an oscillation frequency of the control channel state within the current period. For other algorithm models, the statistics module may count time intervals between receipts of Hello messages by the control channel, and take an average of the time intervals between each two Hello messages as a new Hellolnterval value.

The algorithm module (corresponding to the first determining module described above) is configured to calculate a cycle parameter of Hello message according to an algorithmic model selected by the user. For example, a control channel oscillation frequency in an extreme situation may be calculated according to the expiration cycle of Hello message, HelloDeadlnterval. The Hello message times out each time the control channel is successfully established. Then, a ratio of the counted oscillation frequency to the oscillation frequency in the extreme situation may be taken as an incremental ratio for automatic adjustments of the cycle parameter of Hello message. For example, a ratio of the current the transmission cycle of Hello message, Hellolnterval, to the counted average of the time intervals of Hello messages, may be taken as an incremental ratio for automatic adjustments of the cycle parameter of Hello message.

The suppression module (corresponding to the first processing module described above) is configured to automatically adjust the cycle parameter of Hello message to a reasonable value when the frequency value is greater than the preset threshold, and negotiate to establish the control channel according to the cycle parameter of Hello message.

According to the method and the apparatus provided by the embodiments of the disclosure for suppressing control channel state oscillation in the Link Management Protocol, under a poor network condition, the oscillation frequency of the control channel state may be counted, and if the counted frequency value is greater than the preset threshold, performing suppressing to the control channel state oscillation, thereby preventing the problem of network instability caused by the control channel state oscillation under poor network conditions.

In addition, according to the method and the apparatus provided by the embodiments of the disclosure for suppressing control channel state oscillation in a Link Management Protocol, when calculating a new cycle parameter of Hello message, plural algorithm models can be provided for selection, so as to adapt to different network environments.

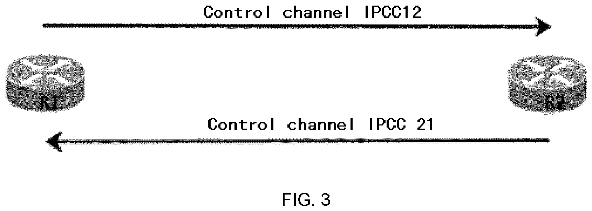

Fig. 3 is a schematic diagram of an application scenario according to an embodiment of the present disclosure. In the application scenario shown in Fig. 3, there are two routers R1 and R2 (corresponding to the above gateway devices), a control channel IPCC 12 is established on R1, and a control channel IPCC 21 is established on R2.

Relevant parameters for suppressing the control channel oscillation, such as a statistics period of the control channel state, a threshold of the oscillation frequency of the control channel state, a suppression strategy of the control channel state, and the like, may be set in advance.

In a case where the control channels between the router R1 and the router R2 are successfully established and the control channel is running, the method for suppressing control channel state oscillation in the Link Management Protocol provided by the embodiments of the disclosure may be used in any device.

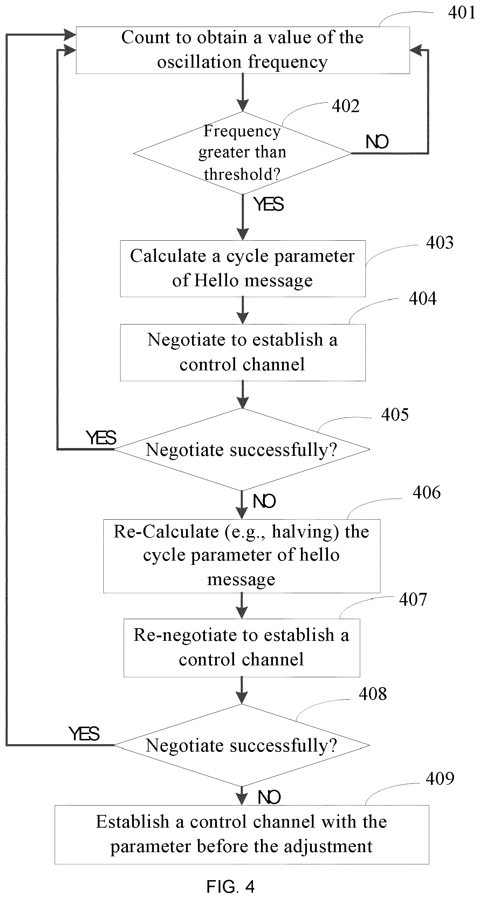

Fig. 4 is another flowchart of the session transmission method according to an embodiment of the present disclosure for suppressing control channel state oscillation in the Link Management Protocol. As shown in Fig. 4, the method includes the following steps 401 to 409.

At step 401, periodically counting an oscillation frequency of the state of the IPCC 12 according to a preset statistics period. The oscillation of the state of the IPCC 12 may be counted by counting the number of times that a parameter negotiation state of the IPCC 12 is restored to the parameter negotiation state after state switching, or by other statistics methods. Then, the counted total number of oscillation of the IPCC 12 state is divided by the duration of the period to obtain an oscillation frequency value of the state of the IPCC 12.

At step 402, determining whether the control channel state oscillation frequency is greater than the preset threshold. If yes, the step of suppressing oscillation is performed; and if not, the control channel state oscillation frequency is continuously counted.

At steps 403 to 409, performing oscillation suppression. First, a suppressed cycle parameter of Hello message is determined according to a Hello message cycle parameter algorithm model specified by the user. Then, parameter negotiation of the control channel is initiated to establish a session with the suppressed cycle parameter of Hello message. After the step of suppressing oscillation is completed, the oscillation frequency of the control channel state is continued to be counted.

According to the above method, the control channel state oscillation can be suppressed when the network condition between the router R1 and the router R2 is poor or unstable, thereby preventing the problem of network instability caused by the control channel state oscillation.

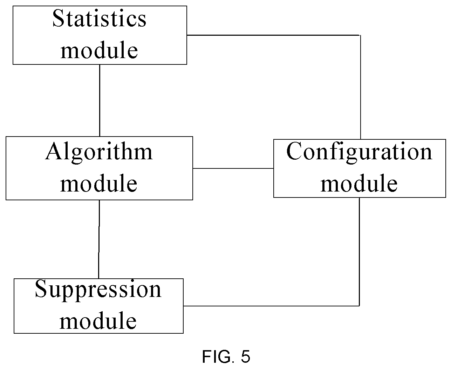

Fig. 5 is a block diagram of a session transmission apparatus according to an embodiment of the present disclosure for suppressing control channel state oscillation in a Link Management Protocol. As shown in Fig. 5, the apparatus includes: a configuration module, a statistics module (corresponding to the statistics unit), an algorithm module, and a suppression module (corresponding to the first processing module).

The configuration module is configured to configure a user-specified suppression strategy for control channel state oscillation.

The statistics module is configured to periodically count an oscillation frequency of a control channel state.

The algorithm module is configured to calculate a cycle parameter of Hello message of the control channel.

The suppression module is configured to automatically adjust the cycle parameter of Hello message to a reasonable value when the frequency value is greater than the preset threshold, and negotiate to establish the control channel according to the cycle parameter of Hello message.

In an embodiment of the present disclosure, the user may also manually modify the cycle parameter of Hello message of the control channel with reference to the counted oscillation frequency of control channel state.

In an embodiment of the present disclosure, the suppression module is further configured to handle failed negotiation of the automatically adjusted cycle parameter of Hello message, initiate parameter negotiation of the control channel, and the like.

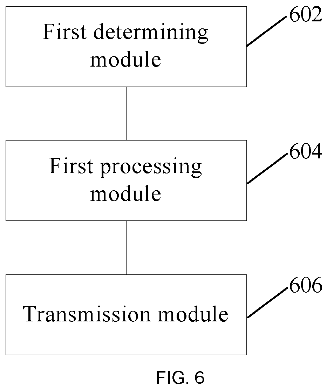

Fig. 6 is another block diagram of the session transmission apparatus according to an embodiment of the present disclosure. As shown in Fig. 6, the apparatus includes: a first determining module 602, a first processing module 604, and a transmission module 606.

The first determining module 602 is configured to determine an oscillation frequency when a session transmission is performed in a control channel by use of a first parameter, wherein the control channel is used for session transmissions between gateway devices. The first processing module 604 is configured to adjust the first parameter value to a second parameter value in a case where the value of the oscillation frequency is greater than a first preset threshold. The first processing module 604 may correspond to the first determining module 602. The transmission module 606 is configured to perform the session transmission in the control channel by use of a second parameter value. The transmission module 606 may correspond to the first processing module 604.

In an embodiment, the first determining module 602 includes: a statistics unit configured to count a first total number of oscillation when the session transmission is performed in the control channel by use of the first parameter value within a current period; and a processing unit connected to the statistics unit and configured to take a ratio of the determined first total number of oscillation to duration of the current period as the value of the oscillation frequency.

In an embodiment, the statistics unit includes a first processing subunit configured to take a total number of times that the control channel is switched from an abnormal session transmission state to a normal session transmission state and from the normal session transmission state to the abnormal session transmission state within the current period as the first total number of oscillation in the process in which the session transmission is performed in the control channel by use of the first parameter value.

In an embodiment, the apparatus is further configured to adjust the first parameter value to a second parameter value in a case where the value of the oscillation frequency is greater than a first preset threshold in the following manner: determining a first product of the value of the oscillation frequency and a first parameter value; determining a first ratio of the first product to a predetermined constant; determining a second product of the first ratio and the first parameter value; and taking a sum of the second product and the first parameter value as the second parameter value.

In an embodiment, the apparatus further includes: a statistics module configured to count, after the session transmission is performed in the control channel by use of a second parameter value, a second total number of oscillation when the session transmission is performed in the control channel by use of the second parameter value within the current period in a case where the session transmission by use of the second parameter value succeeds; and a second processing module configured to adjust, after the session transmission is performed in the control channel by use of a second parameter value, the second parameter value to a third parameter value and performing session transmission in the control channel by use of the third parameter value in a case where the session transmission by use of the second parameter value fails.

In an embodiment, the second processing module adjusts the second parameter value to the third parameter value by: halving the first ratio to obtain a second ratio; calculating a third product of the second ratio and the first parameter value; obtaining the third parameter value by adding the third product and the first parameter value; and adjusting the second parameter value to the obtained third parameter value.

In an embodiment, the apparatus further includes a third processing module configured to reuse, after the session transmission is performed in the control channel using the third parameter value, the first parameter value to perform the session transmission in the control channel in a case where the session transmission by use of the third parameter value fails.

In an embodiment, the apparatus further includes a maintaining module configured to maintain, after the oscillation frequency when the session transmission is performed in the control channel by use of the first parameter value within the current period is determined, the first parameter value in a case where the value of the oscillation frequency is less than or equal to the first preset threshold.

It should be noted that the above modules may be implemented by software or hardware. When implemented by hardware, the modules are all located in the same processor; or the above modules each located in different processors in any combination.

In an embodiment of the present disclosure, there is further provided a computer-readable storage medium storing a program which, when being executed, causes the methods of the foregoing embodiments of the present disclosure to be implemented.

In an embodiment of the present disclosure, the computer-readable storage medium may store program codes for executing the session transmission methods according to foregoing embodiments of the present disclosure.

In an embodiment of the present disclosure, the computer-readable storage medium may include, but is not limited to: a U Disk, a read-only memory (ROM), a random access memory (RAM), a mobile hard disk, a disk or optical disk, and other media that can store a program code.

In an embodiment of the present disclosure, there is further provided a session transmission apparatus, including a memory and a processor, wherein the memory is configured to store a program and the processor is configured to execute the program to implement the methods of the foregoing embodiments of the present disclosure.

Specific examples in this embodiment of the present disclosure may refer to the examples described in the foregoing embodiments, which will not be repeated herein.

Through the description of the above embodiment, those skilled in the art can clearly understand that the method according to the above embodiments may be implemented by means of software plus a necessary general hardware platform. Obviously, it may also be implemented by hardware. Based on such understanding, the technical solutions of the present invention essentially or, in other words, a part thereof contributing to the prior art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the foregoing embodiments of the present disclosure.

The term "module" may be a combination of software and/or hardware that implements a predetermined function.

It will be apparent to those skilled in the art that the modules or steps of the present disclosure described above can be implemented by a general-purpose computing device. In practice, the modules or steps may be centralized on a single computing device, or distributed across a network of computing devices. The various modules or steps may be implemented by a program code executable by a computing device so that they can be stored in a storage device and executed by the computing device, and in some cases, the shown or described steps can be performed in a sequence other than herein, or can be made into respective integrated circuit modules, or a plurality of the modules or steps can be implemented by being made into a single integrated circuit module. In this way, the present disclosure is not restricted to any particular hardware and software combination.

The above are only exemplary embodiments of the present disclosure and are not intended to limit the present disclosure. Various modifications and alterations to this disclosure will become apparent to those skilled in the art. Any modification, equivalent replacement, improvement and the like made within the principle of the present disclosure should be included in the protection scope of the present disclosure.

## Claims

1. A session transmission method, comprising the steps of:
determining an oscillation frequency when a session transmission is performed in a control channel by use of a first parameter, wherein the control channel is used for session transmissions between gateway devices;
adjusting the first parameter value to a second parameter value in a case where a value of the oscillation frequency is greater than a first preset threshold; and
performing the session transmission in the control channel by use of a second parameter value.

2. The method according to claim 1, wherein the step of determining the oscillation frequency when the session transmission is performed in the control channel by use of the first parameter value comprises:
counting a first total number of oscillation when the session transmission is performed in the control channel by use of the first parameter value within a current period; and
taking a ratio of the determined first total number of oscillation to duration of the current period as a value of the oscillation frequency.

3. The method according to claim 2, wherein the step of counting the first total number of oscillation when the session transmission is performed in the control channel by use of the first parameter value within the current period comprises:
taking a total number of times that the control channel is switched from an abnormal session transmission state to a normal session transmission state and then from the normal session transmission state to the normal session transmission state within the current period as the first total number of oscillation in the process in which the session transmission is performed in the control channel by use of the first parameter value.

4. The method according to claim 1, wherein the step of adjusting the first parameter value to the second parameter value in a case where the value of the oscillation frequency is greater than the first preset threshold comprises:
determining a first product of the value of the oscillation frequency and the first parameter value;
determining a first ratio of the first product to a predetermined constant;
determining a second product of the first ratio and the first parameter value; and
taking a sum of the second product and the first parameter value as the second parameter value.

5. The method according to claim 4, wherein after the step of performing the session transmission in the control channel by use of the second parameter value, the method further comprises:
counting a second total number of oscillation when the session transmission is performed in the control channel by use of the second parameter value within the current period in a case where the session transmission by use of the second parameter value succeeds; and
adjusting the second parameter value to a third parameter value and performing session transmission in the control channel by use of the third parameter value in a case where the session transmission by use of the second parameter value fails.

6. The method according to claim 5, wherein the step of adjusting the second parameter value to the third parameter value comprises:
halving the first ratio to obtain a second ratio;
calculating a third product of the second ratio and the first parameter value;
obtaining the third parameter value by adding the third product and the first parameter value; and
adjusting the second parameter value to the obtained third parameter value.

7. The method according to claim 5, wherein after the step of performing session transmission in the control channel by use of the third parameter value, the method further comprises:
reusing the first parameter value to perform the session transmission in the control channel in a case where the session transmission by use of the third parameter value fails.

8. The method according to claim 1, wherein after the step of determining the oscillation frequency when the session transmission is performed in the control channel by use of the first parameter value within the current period, the method further comprises:
maintaining the first parameter value in a case where a value of the oscillation frequency is less than or equal to the first preset threshold.

9. A session transmission apparatus, comprising:
a first determining module configured to determine an oscillation frequency when a session transmission is performed in a control channel by use of a first parameter, wherein the control channel is used for session transmissions between gateway devices;
a first processing module configured to adjust the first parameter value to a second parameter value in a case where a value of the oscillation frequency is greater than a first preset threshold;
a transmission module configured to perform the session transmission in the control channel by use of a second parameter value.

10. The device according to claim 9, wherein the first determining module comprises:
a statistics unit configured to count a first total number of oscillation when the session transmission is performed in the control channel by use of the first parameter value within a current period;
a processing unit configured to take a ratio of the determined first total number of oscillation to duration of the current period as the value of the oscillation frequency.

11. The apparatus according to claim 10, wherein the statistics unit comprises:
a first processing subunit configured to take a total number of times that the control channel is switched from an abnormal session transmission state to a normal session transmission state and then from the normal session transmission state to the abnormal session transmission state within the current period as the first total number of oscillation in the process in which the session transmission is performed in the control channel by use of the first parameter value.

12. A non-transitory computer-readable storage medium storing a program which, when being executed, causes the method of any one of claims 1 to 8 to be implemented.

13. A session transmission apparatus, comprising a memory and a processor, wherein the memory is configured to store a program, and the processor is configured to execute the program to implement the method of any one of claims 1 to 8.
